# FASCICULE DE BREVET EUROPEEN

(11) **EP 4 112 289 B1**
(45) Date de publication et mention de la délivrance du brevet: **28.05.2025**
(21) Numéro de dépôt: 22191137.3
(22) Date de dépôt: 09.01.2017
(51) Int. Cl.: B02C 21/02, B30B 9/32

(54) **PRESSE-CISAILLE AUTOMOTRICE**
SELBSTFAHRENDE SCHERENPRESSE
SELF-PROPELLED PRESS-CUTTER

(30) Priorité: 22.01.2016 BE 201605052
(43) Date de publication de la demande: 04.01.2023
(62) Demande divisionnaire de: 17703917.9
(73) Titulaire: Presses et Cisailles Lefort, 6041 Gosselies (BE)
(72) Inventeur: LEFORT, Christian Yvon N., 1380 Lasne (BE)
(74) Mandataire: Gevers Patents

(56) Documents cités:
- GB-A- 2 074 462
- JP-A- 2003 138 760
- JP-A- 2012 101 165
- JP-A- H01 197 099
- JP-A- H02 155 598
- JP-A- H11 333 318
- JP-A- S5 689 400
- JP-U- H0 281 795
- US-A- 3 730 078
- US-A- 4 685 391
- US-B1- 7 971 817

## Description

### Domaine technique

L'invention concerne une presse-cisaille et une méthode de travail au moyen d'une presse-cisaille.

### Art antérieur

Tel qu'il est connu d'un homme du métier, une « presse-cisaille » est une machine de traitement de ferrailles prévue pour couper et/ou compacter des déchets métalliques de grandes envergures. Ces déchets sont, par exemple, des ferrailles de ramassage, des ferrailles de démolition ou similaires.

Une presse-cisaille comprend, de façon générale, un bac pour recevoir une quantité de ferrailles à traiter, un poussoir hydraulique pour avancer les ferrailles dans le bac, et une sortie à travers laquelle les ferrailles sont dégagées du bac via le poussoir. La sortie se présente sous une forme de portique guillotine verticale avec des lames coupantes pour sectionner les ferrailles qui sont dégagées du bac via le poussoir. Une fois que des ferrailles ont été dégagées du bac par le poussoir, ce dernier est rétracté pour recharger le bac vide avec une nouvelle quantité de ferraille à traiter. Le document EP 2 177 270 A1 divulgue une telle presse-cisaille correspondant aux caractéristiques du préambule de la revendication 1.

Les documents JP S56 89400 A et JP H01 197099 A divulguent d'autres types de machines comprenant des moyens de presse et/ou de coupe.

Les ferrailles sont consécutivement traitées bac après bac. La presse-cisaille prend un certain temps pour effectuer un cycle de traitement. En fin de cycle, la machine s'arrête et attend un nouveau chargement.

Les ferrailles à traiter sont en général au préalable stockées sur un chantier de recyclage de ferrailles, dans des zones pourvues à cette fin. Une fois coupées et compactées, elles sont temporairement rassemblées dans des autres zones du chantier séparées des zones où des ferrailles à traiter sont stockées.

Les chantiers de ferrailles sont généralement équipés d'une presse-cisailles statique. Celle-ci est alimentée par un engin de chargement mobile, par exemple une grue équipée d'un grappin, d'un électro-aimant ou de tout autre équipement apte à aller chercher des ferrailles à traiter et les déposer dans le bac. Plusieurs déplacements de la grue sont toutefois nécessaires pour remplir suffisamment le bac de la presse-cisaille. En particulier, lors d'un cycle de traitement de la presse-cisaille, la grue doit effectuer plusieurs allers-retours pour aller chercher la ferraille à traiter stockée sur le chantier. Etant donné que les volumes de ferrailles à traiter sont importants, les déplacements de la grue sont nombreux et, en outre, de plus en plus longs puisque le stock de ferrailles à traiter est de plus en plus éloigné de la presse-cisaille.

De plus, après chaque cycle de traitement de la presse-cisaille, la grue doit encore être utilisée afin de récupérer les ferrailles traitées à la sortie de la presse-cisaille et les déposer vers la zone de stockage prévue à cette fin. Ceci nécessite de nouveaux déplacements de la grue.

Une presse-cisaille statique présente donc quelques inconvénients inhérents à son immobilité, notamment que :
- les ferrailles à traiter doivent venir à la machine ;
- les ferrailles traitées doivent être dégagées et déplacées après leur traitement pour ne pas obstruer l'évacuation suivante d'une nouvelle quantité de ferrailles traitées de la presse-cisaille ;
- aucune adaptation n'est possible à l'évolution géographique du chantier ;
- la presse-cisaille doit attendre que la ferraille à traiter arrive dès que le stock de cette ferraille à traiter est trop éloigné ;
- les déplacements de la grue génèrent une perte de temps, une consommation importante de gasoil, des bruits, les dangers, une usure de la grue, etc.

L'utilisation d'une presse-cisaille tractée, telle que connue de l'art antérieur, ne répond pas à ces limitations. En effet, une telle presse-cisaille est en pratique utilisées comme presse-cisaille statique car, compte tenu de ses dimensions et de son poids, elle est très peu maniable et nécessite à la fois de grandes zones de manœuvre et un engin de traction. En réalité, les presses-cisailles tractées sont déplaçables de chantier en chantier mais difficilement à l'intérieur d'un chantier.

Une presse-cisaille tractée a donc les mêmes inconvénients que la presse-cisaille statique, mais est en outre confrontées avec aux inconvénients suivants :
- un tracteur pour semi-remorque doit être utilisé ;
- ce tracteur doit potentiellement être détaché lors du travail de la presse-cisaille pour être protégé des chutes éventuelles de ferrailles déplacées par la grue ;
- avant pouvoir déplacer le convoi formé par le tracteur et la presse-cisaille :
   - plusieurs minutes sont nécessaires pour regonfler les circuits pneumatiques du tracteur ;
   - des béquilles de stabilisation, dont est munie la presse-cisaille pour stabiliser celle-ci lors de son travail, doivent être repliées ;
   - le sol du chantier doit être dégagé des ferrailles qui seraient tombées lors du chargement de la presse-cisaille pour ne pas détériorer les pneumatiques du tracteur, les circuits de freinage, de suspension et les câblages électriques ;
   - le moteur principal de la presse-cisaille doit être arrêté pour des raisons de sécurité ;
- ces derniers inconvénients surviennent aussi après le déplacement du convoi car il faut refaire les opérations et les manœuvres inverses lors du nouveau positionnement de la presse-cisaille.

Il est donc souhaitable de disposer d'une presse-cisaille permettant de traiter plus efficacement des ferrailles sur un chantier de récupération de ferrailles.

### Exposé de l'invention

L'objet de l'invention est de fournir une presse-cisaille permettant d'éviter les inconvénients des presses-cisailles statiques et tractées de l'art antérieur, et donc de traiter plus efficacement des ferrailles sur un chantier.

À cet effet, la présente invention propose une presse-cisaille selon la revendication 1 et une méthode de travail pour le traitement de ferrailles selon la revendication 13. La presse-cisaille selon l'invention est automotrice et est pourvue d'une commande à distance pour commander les déplacements de la presse-cisaille au besoin.

La presse-cisaille selon l'invention présente divers avantages. En particulier, elle permet de traiter de façon plus efficace des ferrailles sur un chantier que les presses-cisailles décrites selon l'art antérieur.

En effet, le caractère automoteur de la presse-cisaille de l'invention permet de faire évoluer la presse-cisaille en même temps qu'un engin de chargement qui l'alimente en ferrailles à traiter. Les longs déplacements de l'engin de chargement pour charger la presse-cisaille sont dès lors fortement diminués voire supprimés puisque la presse-cisaille peut suivre les déplacements de l'engin de chargement. Ceci permet un gain de temps dans le traitement des ferrailles vu que :
- il n'est plus nécessaire d'attendre le chargement par l'engin de chargement ;
- il n'est plus nécessaire de dégager la ferraille traitée sortie de la presse-cisaille puisque la presse-cisaille peut avancer après chaque fin de cycle ;
- la presse-cisaille peut être mise au travail immédiatement dès l'arrivée sur site. Ce gain de temps se traduit également par une diminution de la pollution issue de la presse-cisaille, ainsi qu'une économie de carburant pour la presse-cisaille. Le rendement global de la presse-cisaille est en outre meilleur.

Comme les déplacements de la presse-cisaille peuvent être commandés à distance, un opérateur peut travailler à distance de la presse-cisaille, par exemple, depuis une cabine (typiquement de contrôle) de l'engin de chargement, seul et de manière rationnelle, en diminuant, voire supprimant, les déplacements de l'engin de chargement.

Le traitement de ferrailles par presse-cisaille selon l'invention est aussi plus efficace car celle-ci permet d'augmenter le pourcentage du volume de stockage de ferrailles à traiter sur le chantier vu que la zone de manœuvre de l'engin de chargement et de la presse-cisaille automotrice peut être réduite. En particulier, la longueur totale de la presse-cisaille selon l'invention est aussi fortement diminuée par rapport à une presse-cisaille statique ou tractée.

De plus, étant donné que l'engin de chargement se déplace moins, il s'use moins, consomme moins de carburant et génère à la fois moins de bruit et moins de pollution. Les dangers d'accidents sur chantier sont en outre réduits.

Tel qu'il est connu d'un homme du métier, une « presse-cisaille », et donc la presse-cisaille selon l'invention, est munie d'un bac de remplissage pour recevoir des ferrailles à traiter et d'une sortie pour les ferrailles traitées. La sortie fait partie d'un portique comprenant également des lames coupantes et une presse pour couper et comprimer les ferrailles. La sortie est de préférence fermée par une trappe de protection pivotable. Un poussoir horizontal est agencé (au niveau du bac de remplissage) pour dégager les ferrailles du bac de remplissage à travers la sortie.

Tel qu'il est connu d'un homme du métier, le terme « automotrice » revient au fait que la presse-cisaille est pourvue de ses propres moyens de déplacement. Ceux-ci comprennent de préférence des chenilles de traction ou des roues. Elles reposent de préférence par terre, par exemple sur le sol du chantier. Les chenilles de traction induisent une grande maniabilité de la presse-cisaille. Par exemple, il est possible de mettre la presse-cisaille en rotation sur place sur 360°, de sorte qu'une zone de manœuvre réduite est nécessaire, ce qui augmente le volume de stockage de ferrailles. Les chenilles de traction permettent également à la presse-cisaille d'évoluer sur des sites accidentés.

De préférence, la commande à distance de la presse-cisaille est également configurée pour commander des opérations de la presse-cisaille. Par exemple, la commande à distance est configurée pour démarrer et arrêter une opération de la presse-cisaille. Par exemple, la commande à distance permet de commander des fonctions de presse et/ou de cisaille de la presse-cisaille. Comme la commande à distance est de préférence utilisée par l'opérateur de l'engin de chargement, celui-ci peut ainsi commander à la fois les déplacements et les opérations de la presse-cisaille, par exemple depuis la seule cabine de l'engin de chargement, et déplacer les deux machines les deux machines de sorte qu'elles restent à proximité l'une de l'autre pendant le chargement. L'opérateur peut ainsi travailler seul de manière rationnelle, en diminuant, voire même supprimant, les déplacements de l'engin de chargement pendant le chargement.

La presse-cisaille est de préférence dimensionnée pour être transportée sur la route sur une remorque porte engins.

La presse-cisaille comprend de préférence un seul moteur qui sert à la fois pour l'opération de la presse-cisaille et de ses moyens de déplacement. Ainsi, le coût et la place supplémentaire d'un deuxième moteur pour la traction sont évités.

La presse-cisaille selon la présente invention est configurée pour traiter des ferrailles, en particulier selon la méthode de travail ci-après introduite.

La présente invention fournit aussi une méthode de travail pour le traitement de ferrailles stockées sur un chantier de récupération de ferrailles en utilisant :
- une presse-cisaille selon l'invention pourvue d'un bac de remplissage et d'une sortie pour les ferrailles traitées, et
- un engin de chargement pour remplir le bac avec les ferrailles à traiter.

La méthode comprend les étapes suivantes :
- prévoir une zone de stockage avec les ferrailles à traiter ;
- procéder cycliquement au :
   - déplacement de la presse-cisaille dans la zone de stockage ou le long de la zone de stockage dans la portée de l'engin de chargement ;
   - remplissage du bac avec les ferrailles à traiter en utilisant l'engin de chargement ;
   - fonctionnement de la presse-cisaille pour traiter les ferrailles chargées dans le bac et pour dégager la ferraille traitée par la sortie ;
   - déplacement de la presse-cisaille pour le traitement d'un prochain tas de ferrailles à traiter en laissant sur place les ferrailles traitées dégagées de la presse-cisaille.

Une presse-cisaille conventionnelle dotée d'une mobilité autonome, de façon à lui conférer un caractère automoteur, peut être utilisée pour mettre en œuvre la méthode. Cette méthode permet à l'opérateur de l'engin de chargement d'évoluer dans un chantier de ferrailles sans devoir faire de multiples déplacements de plus en plus longs, voir même de supprimer complètement ces déplacements, comme exposé précédemment.

Dans le cadre de l'invention, la commande à distance de la presse-cisaille est utilisée par l'opérateur de l'engin de chargement afin de commander lesdits déplacements de la presse-cisaille au besoin. En particulier, elle est utilisée pour déplacer la presse-cisaille après chaque cycle de traitement de la presse-cisaille, et ce de façon à pouvoir commencer le chargement de la presse-cisaille avec une nouvelle quantité de ferrailles à traiter pour un nouveau cycle de traitement.

De façon générale, les différents modes de réalisation et les avantages de la presse-cisaille selon l'invention se transposent *mutatis mutandis à* la méthode, et inversement.

En particulier, lorsque la commande à distance permet aussi de commander des opérations de la presse-cisaille, celle-ci est de préférence également utilisée par l'opérateur pour démarrer et arrêter l'opération de la presse-cisaille.

De préférence, la presse-cisaille parcourt trajet principalement rectiligne ou curviligne. De moindres déplacements et manœuvres sont ainsi nécessaires et un gain de temps est alors généré.

De préférence, le trajet de la presse-cisaille est parcouru avec la sortie de la presse-cisaille dirigée vers l'arrière, c'est-à-dire dans un sens opposé à celui du trajet parcouru. Ceci permet de laisser les ferrailles traitées sur place sans qu'elles ne gênent les déplacements de la presse-cisaille, et de les laisser alignées le long du parcours rectiligne ou curviligne, ce qui rend plus facile le ramassage de ces ferrailles pour être transportées.

De préférence, la zone de stockage s'étend le long d'un parcours avec un point de départ proche d'une entrée du chantier et un point d'arrivé proche d'une sortie du chantier. De préférence, l'entrée et la sortie du chantier sont proche l'une de l'autre ou coïncident.

L'engin de chargement est de préférence un engin mobile par exemple du type grue à chenilles. Les deux machines, c'est-à-dire la presse-cisaille et l'engin de chargement, peuvent ainsi se déplacer simultanément, de sorte qu'elles soient toujours proches l'une de l'autre, dans le but de minimaliser les déplacements.

Le chantier de ferraille peut notamment être organisé de telle sorte que le trajet qui doit être parcouru par l'ensemble de la presse-cisaille et de l'engin de chargement soit un trajet principalement rectiligne ou curviligne, ce qui nécessite des déplacements et manœuvres moindres et génère un gain de temps .

Beaucoup des avantages exposés ci-dessus s'appliquent pour un engin de chargement statique, par exemple, une superstructure d'une grue qui est montée d'une manière rotative sur une colonne statique. L'engin de chargement utilisé en combinaison avec la presse-cisaille selon l'invention, par exemple, pour mettre en œuvre la méthode de travail susmentionnée peut donc être statique ou mobile.

### Brève description des figures

D'autres caractéristiques et avantages de la présente invention apparaîtront à la lecture de la description détaillée qui suit pour la compréhension de laquelle on se reportera aux figures annexées parmi lesquelles :
- la figure 1 illustre une vue latérale schématique d'une presse-cisaille selon l'art antérieur dans une situation de fonctionnement normal ;
- la figure 2 illustre la presse-cisaille de la figure 1 en état de fonctionnement où des ferrailles traitées sont évacuées ;
- la figure 3 illustre une organisation d'un chantier classique de récupération de ferrailles avec une presse-cisaille statique comme celle de la figure 1 ;
- la figure 4 illustre une vue latérale comme celle de la figure 1 pour une presse-cisaille selon l'invention ;
- la figure 5 illustre une vue en élévation suivant la flèche F5 dans la figure 4 ;
- la figure 6 illustre une organisation d'un chantier de récupération de ferrailles permettant de mettre en œuvre la méthode de travail décrite dans l'exposé de l'invention avec la presse-cisaille des figures 4 et 5.

### Description détaillée de modes de réalisation de l'invention

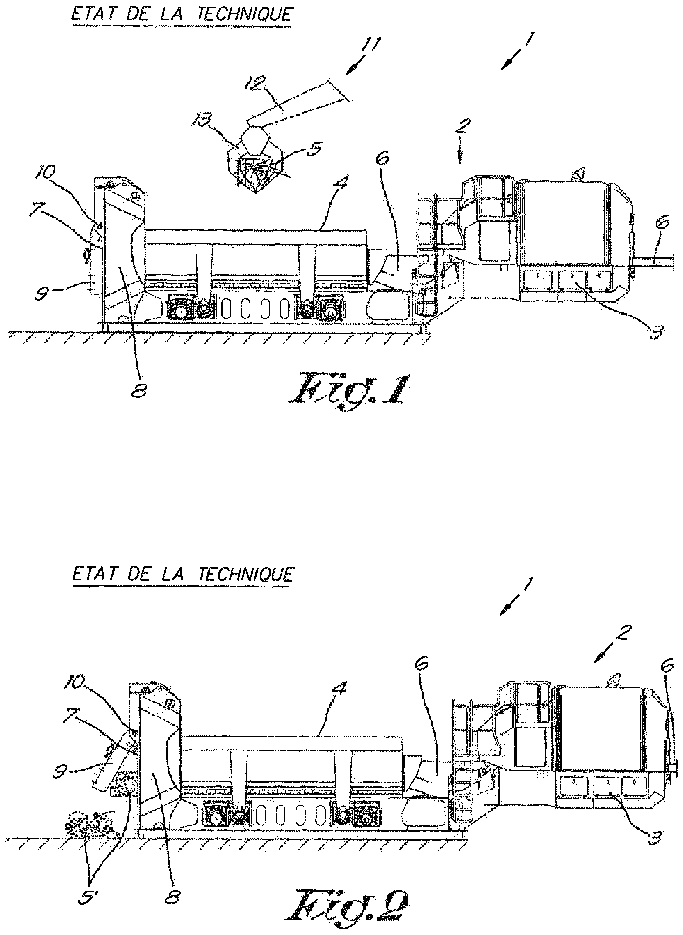

Un exemple de réalisation d'une presse-cisaille selon l'invention est décrit ci-après à titre illustratif et non restrictif, référence étant faite aux figures 1 à 6.

La presse-cisaille à ferrailles statique 1 illustrée en figure 1 comprend une cabine de commande 2, un groupe hydraulique 3, un bac de remplissage 4 pour recevoir les ferrailles à couper 5, un poussoir horizontal 6 agencé pour dégager les ferrailles 5 du bac 4 à travers une sortie 7.

La sortie 7 est formée par un portique 8 qui, d'une manière connue, est muni de lames coupantes et d'une presse (ou presseur) non représentée pour couper et comprimer les ferrailles 5 avant d'être dégagées du bac 4 par la sortie 7. Celle-ci est couverte par une trappe 9 de protection pivotable librement autour de son axe 10.

Le bac 4 de la presse-cisaille 1 est rempli au moyen d'un engin mobile 11 du type grue dont uniquement le bras 12 est montré dans la figure 1 avec à son bout un grappin 13 pour prendre les ferrailles à traiter 5 et de les déposer dans le bac 4, comme illustré dans la figure 1.

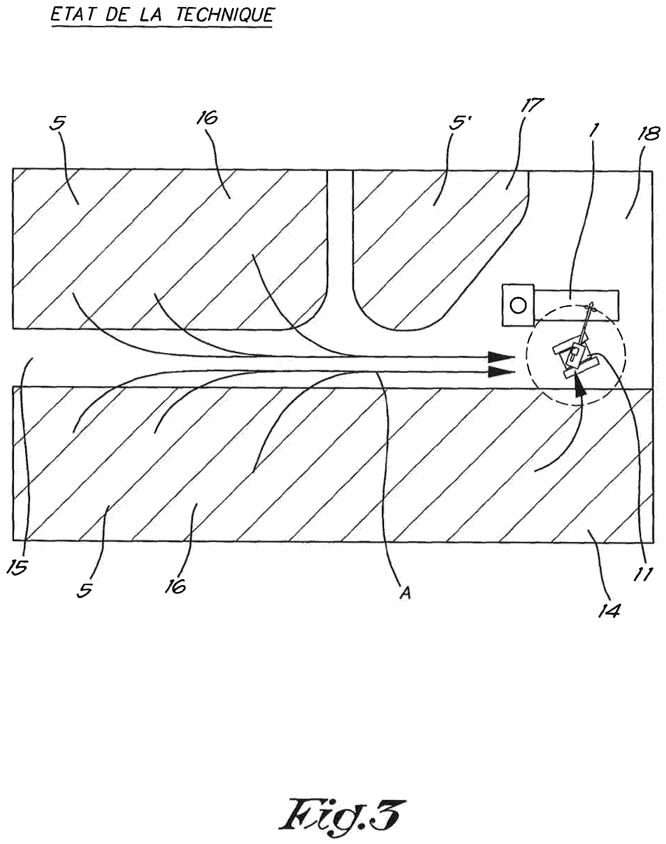

La presse-cisaille 1 est une presse-cisaille classique statique, c'est-à-dire immobile, qui est placée à un endroit fixe du chantier 14 comme visible en figure 3.

Le chantier 14 est accessible par un accès 15 pour l'approvisionnement des ferrailles à traiter 5, lequel fait aussi office de sortie pour l'évacuation des ferrailles traitées 5'. Le chantier 14 est organisé d'une manière classique tel que représenté en figure 3 avec des zones de stockage 16 pour les ferrailles à traiter 5 et des zones de stockage 17 pour les ferrailles traitées 5' par la presse-cisaille 1.

Entre les zones 16 et 17 se trouvent des chemins et zones de manœuvre 18 dans lesquelles l'engin de chargement 11 peut manœuvrer pour aller chercher les ferrailles 5 dans les zones 16 pour les déposer dans le bac 4 et pour récupérer les ferrailles traitées 5' à la sortie 7 de la presse-cisaille pour les déposer dans les zones 17 et pour donner accès aux camions et remorques.

Les trajets parcourus par l'engin de chargement 11 sont indiqués par les flèches A, illustrant que ces trajets A deviennent de plus en plus longs au fur et à mesure que les ferrailles 5 sont traitées.

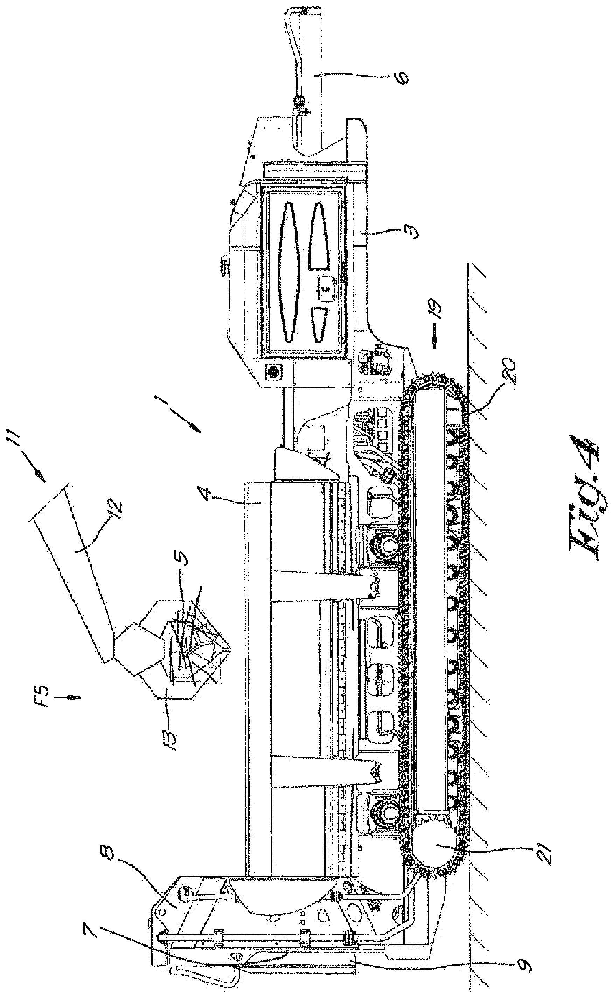

La figure 4 montre un exemple d'une presse-cisaille 1 selon l'invention, qui, dans le cas représenté est une presse-cisaille 1 automotrice équipée de moyens de déplacements et de traction 19 sous forme d'un train de chenilles avec deux chenilles 20, chaque chenille 20 pouvant être entraînée individuellement par son propre moteur hydraulique 21, permettant ainsi de faire tourner la presse-cisaille sur place.

La presse-cisaille 1 selon l'invention est, d'une façon analogue à la presse-cisaille 1 stationnaire de la figure 1, également équipée d'un bac de remplissage 4, d'un poussoir 6, d'un portique 8 avec lames coupantes et presse et avec une sortie 7 fermée par une trappe de protection 9 pivotable. La presse-cisaille 1 est pourvue d'un groupe hydraulique 3, de préférence muni d'un seul moteur thermique ou électrique, pour l'alimentation de vérins et de moteurs hydrauliques du poussoir 6, des lames coupantes et de la presse, des moteurs hydrauliques 21 du train de chenilles 20, ainsi qu'éventuellement d'autres fonctions hydrauliques.

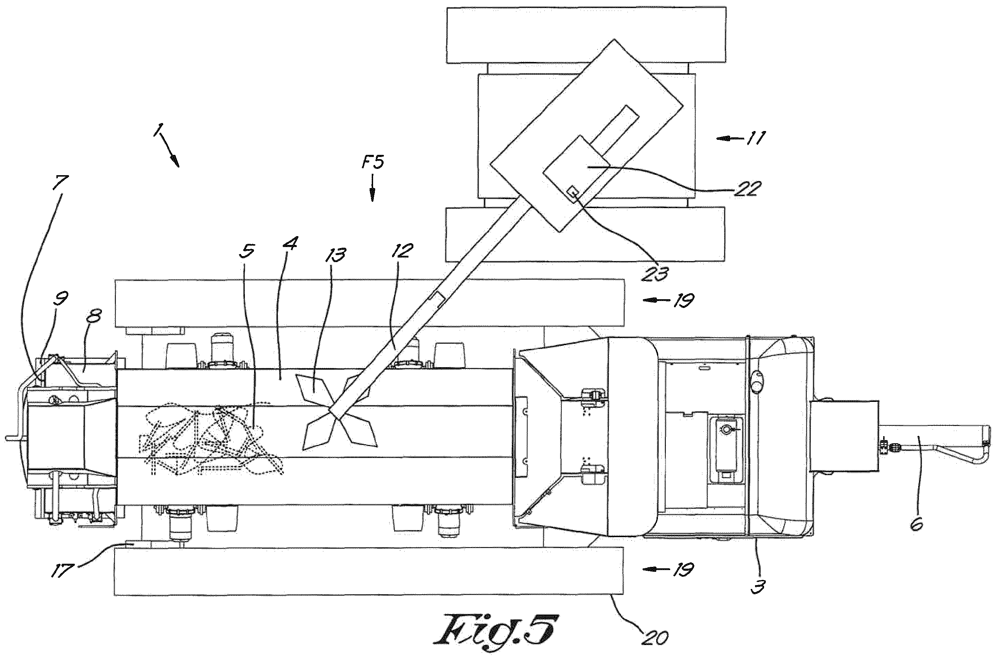

Le chargement de la presse-cisaille 1 peut se faire au moyen d'un engin de chargement 11 comme illustré en figure 5, par exemple avec une grue à chenilles comme engin de chargement 11. Celle-ci est de préférence équipée d'une cabine 22 surélevé pour un opérateur de l'engin de chargement 11, pour avoir une bonne vue sur le chargement de la presse-cisaille 1.

La presse-cisaille 1 selon l'invention est munie d'une commande à distance 23 pour les fonctions presse, cisaille et traction de la presse-cisaille 1. Celle-ci est montée ou transportée par l'opérateur dans la cabine 22 de l'engin de chargement 11 de façon à pouvoir contrôler les opérations de la presse-cisaille 1 sans devoir sortir de la cabine 22. Il est ainsi possible de déplacer les deux machines 1 et 11 pour rester à proximité l'une de l'autre pendant le chargement.

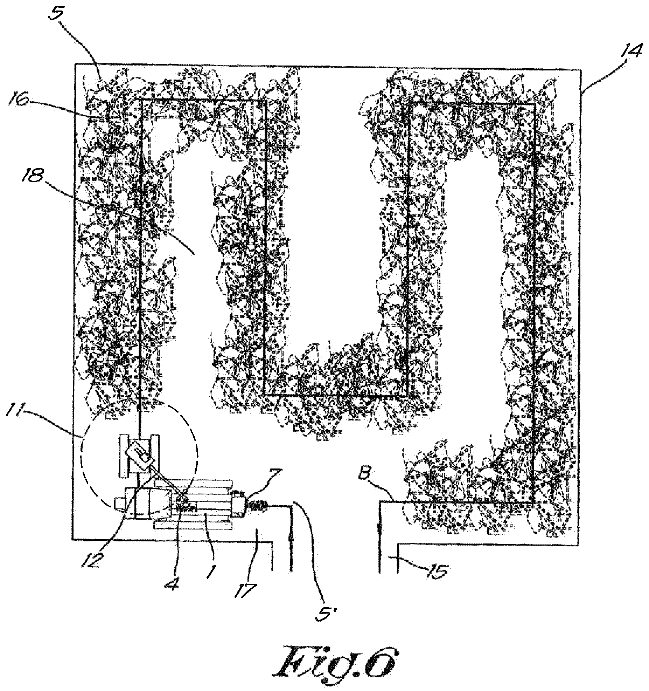

Dans le cas de l'invention, le chantier 14 est organisé comme représenté en figure 6. Les ferrailles à traiter 5 sont entassées dans une zone 16 le long d'un trajet curviligne B qui est suivi à la fois par la presse-cisaille 1 et par l'engin de chargement 11 lors du traitement cyclique des ferrailles.

Dans un premier temps la presse-cisaille 1 est positionnée au début de la zone 16 curviligne avec l'engin de chargement 11 à proximité pour prendre les ferrailles à traiter 5 et de remplir de bac 4 de la presse-cisaille 1.

La presse-cisaille 1 est ensuite mise en marche pour effectuer un cycle de traitement, pour couper et comprimer le contenu du bac 4 qui, à la fin du cycle, est évacué par la sortie 7 à l'arrière de la presse-cisaille 1. Et puis, la presse-cisaille 1 et l'engin de chargement 11 sont déplacés le long de la zone 16 pour un nouveau remplissage et un nouveau cycle de traitement de la presse-cisaille 1 pour couper et compacter des ferrailles. Puisque les ferrailles traitées sont éjectées à l'arrière de la presse-cisaille et que celle-ci est déplacée vers l'avant, les ferrailles traitées 5' éjectées ne gênent pas le déplacement de la presse-cisaille 1 et de l'engin de chargement 11.

Les ferrailles traitées 5' qui sont dégagées de la presse-cisaille 1 restent sur place le long du trajet B qui est maintenant dégagé de ferrailles, permettant un accès facile pour être chargées sur camions.

Le trajet B est de préférence un trajet bouclé avec son point de départ et sa fin proches de l'accès 15.

Pendant que les deux machines 1 et 11 suivent le trajet vers la fin de trajet B, une nouvelle quantité de ferrailles à traiter peut être déposée le long de la zone 16 dégagée de façon à ce que quand les machines arrivent à la fin du boucle B, il peuvent attaquer la nouvelle quantité de ferrailles sans attendre.

Il est clair que les moyens de déplacement 19 de la presse-cisaille 1 ne doivent pas nécessairement être réalisés sous forme de chenilles. Par exemple, une presse-cisaille 1 automotrice sur roues convient aussi pour l'invention.

Sur certains chantiers, l'engin de chargement 11 est une machine immobile, par exemple sous forme d'une tourelle d'une grue montée sur colonne et pouvant prendre les ferrailles tout autour du fait que la tourelle peut tourner sur 360° sur la colonne.

Une presse-cisaille 1 automotrice selon l'invention a l'avantage de pouvoir limiter les mouvements de la tourelle et des équipements de la grue dans un secteur où les ferrailles 5 sont stockées autour de la colonne et de permettre entretemps de renouveler le stock épuisé à un autre endroit où la presse-cisaille 1 vient de passer.

Il est évident que l'invention n'est nullement limitée aux exemples décrits ci-avant mais que de nombreuses modifications peuvent être apportées à la presse-cisaille décrite ci-avant sans sortir du cadre de l'invention telle que définie dans les revendications suivantes.

## Revendications

1. Presse-cisaille (1) comprenant :
- un bac de remplissage (4) pour recevoir des ferrailles (5) à traiter,
- une sortie (7) pour les ferrailles traitées (5'), et
- un poussoir hydraulique (6) horizontal pour dégager les ferrailles (5) du bac de remplissage (4) à travers la sortie (7),
la sortie (7) se présentant sous forme d'un portique (8) guillotine verticale avec des lames coupantes pour sectionner les ferrailles (5) qui sont dégagées du bac de remplissage (4) via le poussoir hydraulique (6),
**caractérisé en ce qu'elle** est automotrice et pourvue d'une commande à distance (23) configurée pour commander des déplacements de la presse-cisaille (1).

2. Presse-cisaille (1) selon la revendication 1, dans laquelle la commande à distance (23) est également configurée pour commander des opérations de la presse-cisaille (1).

3. Presse-cisaille (1) selon la revendication 1 ou 2, comprenant des chenilles de traction (20) comme moyens de déplacement (19).

4. Presse-cisaille (1) selon la revendication 3, dans laquelle les moyens de déplacement (19) sont formés d'un train de deux chenilles de traction (20) dont chacune est entraînée individuellement par un moteur hydraulique (21).

5. Presse-cisaille (1) selon la revendication 1 ou 2, comprenant des roues comme moyens de déplacement (19).

6. Ensemble formé d'une presse-cisaille (1) selon l'une quelconque des revendications 1 à 5 pour traiter des ferrailles (5) et d'un engin de chargement (11) de la presse-cisaille (1) en ferrailles (5) à traiter.

7. Ensemble selon la revendication 6, dans lequel l'engin de chargement (11) comprend une cabine (22) surélevée pour recevoir un opérateur et dans laquelle est montée ou transportée la commande à distance (23).

8. Ensemble selon la revendication 6 ou 7, dans lequel la presse-cisaille (1) et l'engin de chargement (11) sont deux machines distinctes et configurées pour opérer à distance l'une de l'autre.

9. Ensemble selon l'une quelconque des revendications 6 à 8, dans lequel l'engin de chargement (11) est statique.

10. Ensemble selon la revendication 9, dans lequel l'engin de chargement (11) est une superstructure d'une grue montée d'une manière rotative sur une colonne statique.

11. Ensemble selon l'une quelconque des revendications 6 à 8, dans lequel l'engin de chargement (11) est mobile.

12. Ensemble selon la revendication 11, dans lequel l'engin de chargement (11) est une grue mobile.

13. Méthode de travail pour le traitement de ferrailles (5) stockées sur un chantier de récupération de ferrailles en utilisant :
- une presse-cisaille (1) selon l'une quelconque des revendications 1 à 5, et
- un engin de chargement (11) pour remplir le bac de remplissage (4) avec des ferrailles (5) à traiter,
la méthode comprenant les étapes suivantes :
- prévoir une zone de stockage (16) avec des ferrailles (5) à traiter ;
- procéder cycliquement au :
• déplacement de la presse-cisaille (1), au moyen de la commande à distance (23), dans la zone de stockage (16) ou le long de la zone de stockage (16), à portée de l'engin de chargement (11) ;
• remplissage du bac de remplissage (4) avec des ferrailles (5) à traiter en utilisant l'engin de chargement (11) ;
• fonctionnement de la presse-cisaille pour traiter les ferrailles (5) chargées dans le bac de remplissage (4) et pour dégager la ferraille traitée (5') par la sortie (7) ;
• déplacement de la presse-cisaille (1), au moyen de la commande à distance (23), pour traiter un prochain tas de ferrailles (5) à traiter en laissant sur place les ferrailles traitées (5') dégagées de la presse-cisaille (1).

14. Méthode selon la revendication 13, dans laquelle les déplacements de la presse-cisaille (1) sont commandés par un opérateur de l'engin de chargement (11), depuis une cabine (22) de l'engin de chargement (11) dans laquelle est montée ou transportée la commande à distance (23).

15. Méthode selon la revendication 13 ou 14, dans laquelle l'engin de chargement (11) est une superstructure d'une grue montée d'une manière rotative sur une colonne statique, la méthode comprenant en outre cycliquement un renouvellement des ferrailles à traiter (5) à un endroit d'où la presse-cisaille (1) s'est déplacée après avoir traité des ferrailles (5).

## Patentansprüche

1. Scherpresse (1), umfassend:
- eine Füllwanne (4) zum Aufnehmen des zu bearbeitenden Metallschrotts (5),
- einen Ausgang (7) für den bearbeiteten Metallschrott (5'), und
- einen horizontalen hydraulischen Stößel (6) zum Abgeben des Metallschrotts (5) aus der Füllwanne (4) durch den Ausgang (7) hindurch,
wobei sich der Ausgang (7) in Form eines vertikalen Fallrahmens (8) mit schneidenden Klingen darstellt, um den Metallschritt (5), der über den hydraulischen Stößel (6) aus der Füllwanne (4) abgegeben wird, zu durchtrennen, **dadurch gekennzeichnet, dass** sie selbsttreibend, und mit einer Fernsteuerung (23) versehen ist, die konfiguriert ist, um die Bewegungen der Scherpresse (1) zu steuern.

2. Scherpresse (1) nach Anspruch 1, wobei die Fernsteuerung (23) auch konfiguriert ist, um Betriebe der Scherpresse (1) zu steuern.

3. Scherpresse (1) nach Anspruch 1 oder 2, die Raupenzüge (20) als Bewegungsmittel (19) umfasst.

4. Scherpresse (1) nach Anspruch 3, wobei die Bewegungsmittel (19) aus einem Raupenzug mit zwei Raupen (20) gebildet sind, von denen jede einzeln durch einen Hydraulikmotor (21) angetrieben ist.

5. Scherpresse (1) nach Anspruch 1 oder 2, die Räder als Bewegungsmittel (19) umfasst.

6. Anordnung, die durch eine Scherpresse (1) nach einem der Ansprüche 1 bis 5 zur Bearbeitung von Metallschrott (5) und einem Ladegerät (11) der Scherpresse (1) für zu bearbeitenden Metallschrott (5) gebildet wird.

7. Anordnung nach Anspruch 6, wobei das Ladegerät (11) eine hochliegende Kabine (22) umfasst, um einen Bediener aufzunehmen, und in der die Fernsteuerung (23) montiert ist oder transportiert wird.

8. Anordnung nach Anspruch 6 oder 7, wobei die Scherpresse (1) und das Ladegerät (11) zwei unterschiedliche Maschinen sind und konfiguriert sind, um im Abstand zueinander betrieben zu werden.

9. Anordnung nach einem der Ansprüche 6 bis 8, wobei das Ladegerät (11) statisch ist.

10. Anordnung nach Anspruch 9, wobei das Ladegerät (11) ein Oberbau eines Krans ist, der drehbar auf einem statischen Ständer montiert ist.

11. Anordnung nach einem der Ansprüche 6 bis 8, wobei das Ladegerät (11) beweglich ist.

12. Anordnung nach Anspruch 11, wobei das Ladegerät (11) ein beweglicher Kran ist.

13. Arbeitsverfahren zum Bearbeiten von gelagertem Metallschrott (5) auf einer Metallschrottrecyclingstelle unter Verwendung:
- einer Scherpresse (1) nach einem der Ansprüche 1 bis 5, und
- einem Ladegerät (11), um die Füllwanne (4) mit zu bearbeitendem Metallschritt (5) zu füllen,
wobei das Verfahren die folgenden Schritte umfasst:
- Vorsehen eines Lagerbereichs (16) mit dem zu bearbeitenden Metallschrott (5);
- zyklisches Vornehmen von:
- Bewegen der Scherpresse (1) anhand der Fernsteuerung (23) im Lagerbereich oder entlang des Lagerbereichs (16) in der Reichweite des Ladegeräts (11);
- Füllen der Füllwanne (4) mit dem zu bearbeitenden Metallschrott (5) unter Verwendung des Ladegeräts (11);
- Betreiben der Scherpresse um den in der Füllwanne (4) geladenen Metallschrott (5) zu bearbeiten und um den bearbeiteten Metallschrott (5') durch den Ausgang (7) abzugeben;
- Bewegen der Scherpresse (1) anhand der Fernbedienung (23), zum Bearbeiten eines nächsten zu bearbeitenden Metallschrottstapels (5), wobei der aus der Wanne (4) abgegebene bearbeitete Metallschrott (5') an Ort und Stelle gelassen wird.

14. Verfahren nach Anspruch 13, wobei die Bewegungen der Scherpresse (1) von einem Bediener des Ladegeräts (11) aus einer Kabine (22) des Ladegeräts (11) gesteuert werden, in der die Fernsteuerung (23) montiert ist oder transportiert wird.

15. Verfahren nach Anspruch 13 oder 14, wobei das Ladegerät (11) ein Oberbau eines Krans ist, der drehbar auf einem statischen Ständer montiert ist, wobei das Verfahren weiter zyklisch eine Erneuerung des zu bearbeitenden Metallschritts (5) an einer Stelle umfasst, von wo aus die Scherpresse (1) bewegt wird, nachdem sie den Metallschrott (5) bearbeitet hat.

## Claims

1. Shearing press (1) comprising:
- a filling tray (4) for receiving scrap metal (5) to be processed,
- an outlet (7) for processed scrap metal (5'), and
- a horizontal hydraulic tappet (6) for releasing the scrap metal (5) from the filling tray (4) through the outlet (7),
the outlet (7) being in the form of a vertical guillotine gate (8) with cutting blades for cutting through the scrap metal (5) which is released from the filling tray (4) via the hydraulic tappet (6), **characterised in that** it is self-powered and provided with a remote control (23) configured to control movements of the shearing press (1).

2. Shearing press (1) according to claim 1, wherein the remote control (23) is also configured to control operations of the shearing press (1).

3. Shearing press (1) according to claim 1 or 2, comprising traction crawlers (20) as movement means (19).

4. Shearing press (1) according to claim 3, wherein the movement means (19) are formed by a crawler track of two traction crawlers (20), each of which being individually driven by a hydraulic motor (21).

5. Shearing press (1) according to claim 1 or 2, comprising wheels as movement means (19).

6. Assembly formed by a shearing press (1) according to any one of claims 1 to 5 for processing scrap metal (5) and a filling vehicle (11) for loading the shearing press (1) with scrap metal (5) to be processed.

7. Assembly according to claim 6, wherein the filling vehicle (11) comprises an elevated cabin (22) to receive an operator and in which the remote control (23) is mounted or transported.

8. Assembly according to claim 6 or 7, wherein the shearing press (1) and the filling vehicle (11) are two separate machines and configured to operate remotely from each other.

9. Assembly according to any one of claims 6 to 8, wherein the filling vehicle (11) is static.

10. Assembly according to claim 9, wherein the filling vehicle (11) is a superstructure of a crane rotatably mounted on a static column.

11. Assembly according to any one of claims 6 to 8, wherein the filling vehicle (11) is mobile.

12. Assembly according to claim 11, wherein the filling vehicle (11) is a mobile crane.

13. Working method for processing scrap metal (5) stored at a scrap-metal collecting site using:
- a shearing press (1) according to any one of claims 1 to 5, and
- a filling vehicle (11) for loading the filling tray (4) with scrap metal (5) to be processed,
the method comprising the following steps:
- of providing a storage zone (16) with scrap metal (5) to be processed;
- of proceeding cyclically with the:
• movement of the shearing press (1), by means of the remote control (23), into the storage zone (16) or along the storage zone (16) within the range of the filling vehicle (11);
• loading of the filling tray (4) with scrap metal (5) to be processed using the filling vehicle (11);
• operating the shearing press to process the scrap metal (5) loaded into the filling tray (4) and to release the processed scrap metal (5') through the outlet (7);
• movement of the shearing press (1), by means of the remote control (23), for the processing of a next pile of scrap metal (5) to be processed, by leaving in place the processed scrap metal (5') released from the shearing press (1).

14. Method according to claim 13, wherein the movements of the shearing press (1) are controlled by an operator of the filling vehicle (11), from a cabin (22) of the filling vehicle (11) in which the remote control (23) is mounted or transported.

15. Method according to claim 13 or 14, wherein the filling vehicle (11) is a superstructure of a crane rotatably mounted on a static column, the method further comprising cyclically renewing the scrap metal to be processed (5) at a location from which the shearing press (1) has moved after processing scrap metal (5).
